# FASCICULE DE BREVET EUROPEEN

(11) **EP 0 579 798 B1**
(45) Date de publication et mention de la délivrance du brevet: **23.07.1997**
(21) Numéro de dépôt: 93902028.5
(22) Date de dépôt: 10.02.1993
(51) Int. Cl.: B01D 35/10

(54) **APPAREIL ET MODULE DE FILTRATION D'UN LIQUIDE**
ANLAGE UND FILTRATIONSMODUL FUER FLÜSSIGKEITEN
LIQUID FILTRATION MODULE AND APPARATUS

(30) Priorité: 10.02.1992 CH 3532/91
(43) Date de publication de la demande: 26.01.1994
(73) Titulaire: LEYAT FILS MARKETING S.A, CH-1950 Sion (CH)
(72) Inventeur: LEYAT, Jean-Claude, CH-1950 Sion (CH)
(74) Mandataire: Micheli, Michel-Pierre
(86) Numéro de dépôt international: CH9300034
(87) Numéro de publication internationale: WO9315821

(56) Documents cités:
- EP-A- 0 280 052
- EP-A-02 800 523

## Description

La présente invention concerne un module filtrant pour appareil de filtration d'un liquide, plus particulièrement destiné à la clarification de l'eau potable, ainsi que pour le recyclage d'eaux usées domestiques ou industrielles, de même que pour d'autres applications relevant par exemple de la chimie en général, de l'agroalimentaire, etc.

Dans de nombreux domaines industriels, il est nécessaire de disposer d'installations de filtration de liquides, notamment de l'eau, qui soient efficaces et pratiques à utiliser. De préférence, ces installations doivent comporter un système de filtration qui puisse être aisément nettoyé, par exemple par rinçage à contre-courant, sans nécessiter le démontage de l'installation, et si possible automatiquement.

On connait déjà, par exemple du document EP-A-0 280 052, un appareil pour la filtration de liquides qui comporte un assemblage de faisceaux de fibres verticales fixées par leur extrémité supérieure à l'intérieur du corps de l'appareil, cet assemblage formant en position de service une masse filtrante sous l'action de la pression exercée par une chambre gonflable, située à l'intérieur dudit corps et entourant ledit assemblage sur toute sa hauteur. Ce type d'appareil présente toutefois certains inconvénients liés notamment au fait qu'il constitue un tout sans possibilité de remplacer aisément la masse filtrante après plusieurs usages, et que la chambre gonflable n'est prévue que pour la compression des fibres en phase de filtration.

En conséquence, le but de la présente invention consiste à remédier aux inconvénients précités, en fournissant une masse filtrante plus pratique à utiliser et qui se présente sous la forme d'un module interchangeable incluant une ceinture gonflable qui est prévue pour être utilisée essentiellement en phase de nettoyage et qui soit conçue de manière à améliorer l'efficacité de ce nettoyage.

Ainsi, l'objet de cette invention, visant à atteindre le but précité, est constitué par un module filtrant pour un appareil de filtration d'un liquide qui présente les caractéristiques définies dans la revendication 1.

Un autre objet de cette invention consiste en un appareil de filtration d'un liquide tel que défini dans la revendication 5.

Le dessin annexé illustre schématiquement et à titre d'exemple les deux objets de l'invention.

La figure 1 est une vue d'un schéma de principe d'une réalisation de l'appareil de filtration selon l'invention.

Les figures 2 et 3 sont des vues respectivement de côté partiellement en coupe verticale et de dessus partiellement en coupe horizontale d'une forme d'exécution du module filtrant selon l'invention.

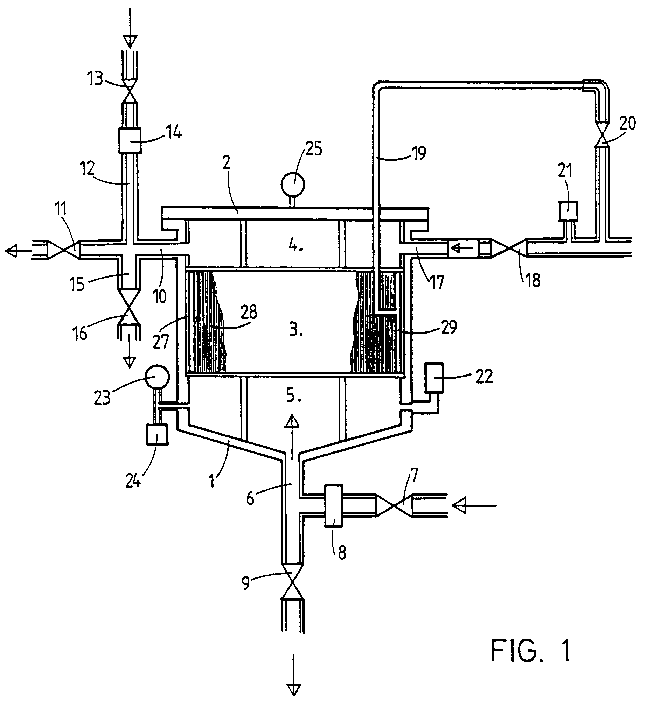

En référence tout d'abord à la figure 1, l'appareil illustré comprend un corps de filtre 1 de forme cylindrique, dont la partie supérieure est fermée par un couvercle 2, et dans lequel est logé un module filtrant 3, qui sera décrit en détail plus loin. Ce module filtrant 3 occupe la position centrale du volume interne défini par le corps de filtre 1, de telle sorte que deux cavités respectivement supérieure 4 et inférieure 5 soient formées au-dessus, respectivement au-dessous, dudit module.

L'introduction du liquide à traiter se fait par un orifice 6 situé à l'extrémité inférieure du fond conique du corps 1, le tube d'introduction étant muni d'une vanne 7 et d'un régulateur de débit 8; l'orifice d'introduction 6 sert également d'orifice de purge et est donc relié à un tube d'évacuation muni d'une vanne 9. Dans la cavité supérieure 4 sont percés deux orifices, le premier orifice 10 servant de sortie du liquide filtré et étant relié à un tube de sortie muni d'une vanne 11, d une part, et à un tube d'introduction de liquide de rinçage 12 passant par une vanne 13 et un régulateur de débit 14, ainsi qu'à un tube de purge 15 muni d'une vanne 16, d'autre part. Le second orifice 17 est destiné à l'introduction d'air comprimé passant par une vanne avec clapet anti-retour 18 dans la cavité supérieure 4; de plus, le circuit d'air comprimé comporte également une tubulure d'alimentation 19 aboutissant au module filtrant 3 et dont la fonction sera décrite plus loin. Une vanne d'admission 20 est en outre prévue sur cette tubulure 19, de même qu'un pressostat de contrôle 21.

L'appareillage selon l'invention tel qu'il est schématisé sur la figure 1 peut en plus comporter d'autres accessoires, tels qu'un reniflard 22, ainsi qu'un pressostat de rinçage 23, un pressostat de pression maxi 24 et un manomètre de contrôle aval 25.

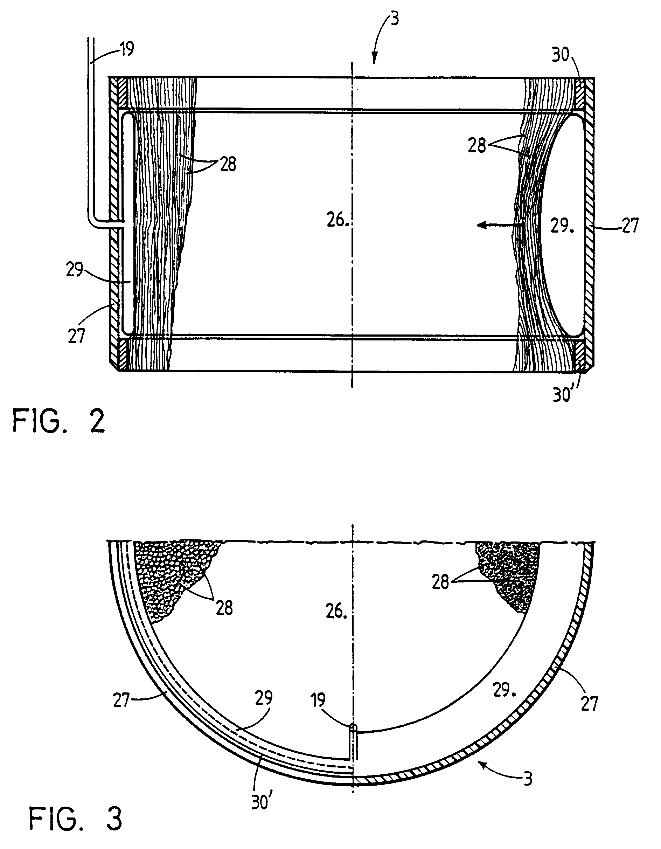

En ce qui concerne le module filtrant proprement dit, tel qu'il est représenté à titre d'exemple sur les figures 2 et 3, il est constitué par une masse filtrante 26 logée dans une gaine cylindrique 27 en un matériau synthétique, par exemple en PVC, ou éventuellement métallique.

Cette masse filtrante 26 est formée ici par des fibres textiles continues 28, par exemple en polyester, et ayant chacune un diamètre de l'ordre de 15 micromètres environ; ces fibres peuvent présenter un léger "crêpage" et sont disposées axialement, pratiquement parallèlement les unes aux autres, dans la gaine cylindrique 27.

Selon des variantes non illustrées, les fibres formant la masse filtrante peuvent présenter un diamètre compris entre environ 3 et 40 micromètres; leur section n'est pas nécessairement circulaire, mais par exemple en forme de C ou de Y. La masse filtrante peut également être constituée de fibres ayant des caractéristiques différentes les unes des autres (dimensions et forme de la section) ou par des fibres non continues assemblées axialement par cardage.

A titre d'exemple pratique, on peut utiliser des tubes capillaires du type de ceux commercialisés sous la marque "SORBAROD" (Baumgartner Papiers S.A., Suisse), dont on enlève l'enveloppe extérieure, par exemple en polyéthylène, pour réaliser par assemblage de plusieurs de ces tubes ladite masse filtrante 26.

La capacité de passage du liquide à filtrer et de rétention des matières en suspension dans celui-ci est déterminée par la nature des fibres constitutives et par la densité du bourrage ou de remplissage par lesdites fibres. Le choix de cette densité sera effectué notamment en fonction du liquide à traiter et des impuretés à retenir. Cette densité correspond pour le "SORBAROD" précité à environ 30000 fibres/cm2; elle peut par contre dans d'autres variantes être comprise environ entre 10'000 et 100'000 fibres/cm2.

Enfin, le module filtrant 3 comporte encore un dispositif de compression radiale de la masse filtrante 26 constitué par une ceinture gonflable formée par une chambre à air circulaire 29 entourant ladite masse filtrante et reliée à la tubulure d'air comprimé 19. De préférence, la ceinture gonflable 29 n'entoure pas la masse filtrante sur la totalité de sa hauteur, et les espaces annulaires supérieure et inférieure sont occupés par des bagues respectivement supérieure 30 et inférieure 30' qui servent en outre au maintien axial de la masse filtrante 26 dans la gaine cylindrique 27. En pratique, la ceinture gonflable 29 et les deux bagues, respectivement supérieure 30 et inférieure 30', peuvent être réalisées en une seule pièce qui est introduite à force dans la gaine cylindrique 27 et qui forme ainsi une cartouche facilement interchangeable.

La ceinture gonflable 29 est conçue de telle sorte que lorsqu'on y introduit de l'air, par la tubulure 19, elle se gonfle et comprime la masse filtrante radialement en direction de son axe central (voir moitié de droite de la figure 2). La masse filtrante 26 et la ceinture gonflable reprennent leur forme initiale (figure 2, moitié de gauche) lorsque l'introduction d'air par la tubulure 19 est arrêtée, et que l'on fait à nouveau passer de l'eau, puis de l'air, axialement à travers la masse filtrante 26. La possibilité de comprimer radialement la masse filtrante 26 grâce à cette ceinture gonflable permet d'améliorer nettement l'efficacité du nettoyage par lavage à contre-courant de ladite masse filtrante 26.

Pour un module de 300 mm de diamètre, la compression radiale de la masse filtrante 26 peut être de l'ordre de 40 mm à mi-hauteur par rapport au diamètre initial. Un tel module de 300 mm de diamètre, avec une hauteur de 150 mm permet de filtrer de l'eau avec un débit de l'ordre de 300 lt/min.

On décrira maintenant d'une manière générale le fonctionnement de l'appareil décrit précédemment en référence à la figure 1.

Tout d'abord, dans la position de fonctionnement normale comme filtre, les vannes 9, 13, 16, 18 et 20 sont fermées, et le liquide à traiter, par exemple de l'eau, est introduit par la vanne 7 (ouverte), passe en montant à travers le module filtrant 3 et sort filtré par la vanne 11.

Chaque appareil a une capacité de filtrage déterminée selon le type de liquide à filtrer, et qui est contrôlée par un limitateur de débit 8, lequel évite également le dépassement de la pression amont (dans la cavité inférieure 5) fixée. Avec un module filtrant tel que celui décrit ci-dessus à titre d'exemple et en référence aux figures 2 et 3, la pression du travail normal est de l'ordre de 5 bars (avec un débit de l'ordre de 300 lt/min) et la pression différentielle fixée est de + 0,3 bar.

Lorsque la pression dans cette cavité amont 5 atteint le niveau fixé par rapport à la pression initiale, par exemple 5,3 bars, le rinçage à contre-courant doit alors être effectué. En pratique, c'est le pressostat à contact 23 qui contrôle cette pression et déclenche la phase de rinçage. De préférence, le fonctionnement de l'appareil est automatisé et informatisé, et le déclenchement du pressostat 23 donne l'ordre électroniquement de procéder aux opérations suivantes en vue du nettoyage et du rinçage du module filtrant :
(a) fermeture des vannes d'entrée 7 et de sortie 11,
(b) ouverture de la vanne de purge 9 pour que le liquide de la cavité inférieure ou amont 5 puisse se vider, puis
(c) introduction d'air dans la chambre à air 29 par l'ouverture de la vanne 20 (la vanne 18 étant elle fermée) afin de gonfler cette ceinture et ainsi comprimer radialement la masse filtrante 26 contenant des résidus de matières solides accumulés durant la phase de filtration, puis cette vanne 20 est fermée;
(d) introduction d'air dans la cavité 4 par l'ouverture de la vanne 18, de manière à pousser vers le bas l'eau entraînant les résidus solides agglomérés par la compression de la masse filtrante 26 à travers cette masse filtrante, et évacuation par l'orifice de purge 6 (la vanne 9 étant ouverte);
(e) fermeture de la vanne 18 et introduction d'eau dans la cavité supérieure 4 par l'ouverture de la vanne 13, laquelle est refermée après quelques secondes; puis, reprise des opérations décrites aux points (c) et (d) ci-dessus;
(f) enfin, après une dernière purge du système en insufflant de l'air par l'ouverture de la vanne 18, les vannes 18 et 9 sont fermées, et les vannes 7 et 16 sont ouvertes; puis, la vanne de sortie 11 est ouverte, et enfin la vanne 16 est fermée, le processus de filtration pouvant alors reprendre comme décrit précédemment.

Le cycle complet du nettoyage-rinçage dure environ 1 minute, et peut bien entendu être répété plusieurs fois de suite, si nécessaire, plus particulièrement les opérations (c) à (e), et être effectué avec des séquences différentes quant à l'ordre des diverses opérations. Enfin, l'opération de filtration pourra être reprise comme décrit précédemment, jusqu'à ce qu'un nouveau cycle de nettoyage-rinçage soit déclenché en fonction de la pression différentielle mesurée.

Selon une variante non illustrée de l'apareil selon l'invention, celui-ci peut comporter plusieurs modules filtrants tels que celui décrit précédemment, ces modules filtrants étant disposés parallèlement les uns aux autres dans une gaine cylindrique unique d'un diamètre nettement supérieur à celle décrite en référence aux dessins annexés. L'appareil comporterait alors en outre une plaque d'assemblage supérieure et une plaque d'assemblage inférieure pour maintenir ensemble les modules filtrants et assurer l'étanchéité entre ceux-ci, afin que le liquide à filtre ne puisse passer qu'à travers les masses filtrantes de ces modules.

Enfin, il convient également de noter que la ceinture gonflable 29 est également utilisable d'une manière quelque peu différente de celle décrite ci-avant, plus particulièrement dans le but de modifier par compression la densité des fibres constitutives de la masse filtrante afin d'en changer les caractéristiques de filtration. Dans ce cas, il suffit d'agir sur la tubulure 19 d'introduction d'air, afin d'ajuster la densité réelle de la masse filtrante 26. Lorsque cette masse filtrante a été comprimée pour l'opération de filtration (moitié de droite de la figure 2), alors les étapes du processus de nettoyage à contre-courant du filtre telles que décrites précédemment devront être modifiées en conséquence, la première de ces étapes étant celle de la "décompression" de la masse filtrante 26.

## Revendications

1. Module filtrant pour appareil de filtration d'un liquide comportant une masse filtrante compacte (3) formée de fibres (28) allongées disposées axialement pratiquement parallèlement les unes aux autres, caractérisé par le fait que lesdites fibres sont maintenues par compression radiale dans une gaine cylindrique rigide (27) de telle sorte que la densité de bourrage ou de remplissage de la masse filtrante soit comprise entre 10'000 et 100'000 fibres/cm², par le fait qu'une ceinture gonflable (29) entourant cette masse filtrante est disposée entre celle-ci et la paroi interne de ladite gaine cylindrique pour augmenter temporairement la densité de ladite masse, cette ceinture étant reliée à une alimentation en air comprimé (19), et par le fait que la ceinture gonflable (29) est d'une hauteur inférieure à celle de la masse filtrante (3) et que des éléments annulaires (30,30') sont disposés dans la gaine cylindrique (27) au-dessus respectivement au-dessous de cette ceinture gonflable.

2. Module filtrant selon la revendication 1, caractérisé par le fait que la gaine cylindrique (27) entourant la masse filtrante (3) est réalisée en un matériau synthétique, par exemple en chlorure de polyvinyle, ou métallique.

3. Module filtrant selon la revendication 1 ou la revendication 2, caractérisé par le fait que les fibres sont continues ou non, qu'elles sont de section circulaire ou autre, et que cette section présente un diamètre, respectivement une dimension transversale, comprise entre 3 et 40 micromètres.

4. Module filtrant selon l'une des revendications 1 à 3, caractérisé par le fait que ces deux éléments forment avec ladite ceinture gonflable une cartouche interchangeable d'une seule pièce de fabrication.

5. Appareil de filtration d'un liquide comportant un corps de filtre (1) qui présente des orifices respectivement d'entrée (6) du liquide à traiter et de sortie (10) du liquide filtré, ainsi que des orifices d'introduction (12,17) d'eau de rinçage et d'air comprimé, et des orifices d'évacuation (6,15) pour la purge et le rinçage de l'appareil, caractérisé par le fait qu'un module selon l'une des revendications 1 à 4 est logé de manière amovible dans ledit corps de filtre (1).

6. Appareil de filtration selon la revendication 5, caractérisé par le fait que le corps de filtre (1) est divisé verticalement en trois zones, une première zone (5) située dans la partie inférieure du corps comportant les orifices d'entrée (6) du liquide à traiter et d'évacuation ainsi que des moyens de contrôle de la pression interne (23,24), une seconde zone (4) située dans la partie supérieure du corps et comportant les orifices de sortie du liquide filtré (10) ainsi que ceux d'introduction (12,17) d'air comprimé et d'eau de rinçage, et une troisième zone située entre les deux premières et dans laquelle est logé le module filtrant (3).

7. Appareil de filtration selon la revendication 5 ou la revendication 6, caractérisé par le fait qu'il comporte plusieurs modules filtrant logés parallèlement les uns aux autres dans ledit corps de filtre, ces modules étant maintenus entre eux par des plaques d'assemblage respectivement supérieure et inférieure assurant également l'étanchéité entre lesdits modules.

## Claims

1. A filtration module for a filtration apparatus for a liquid, comprising a compact filtration mass (3) formed of elongated fibers (28) arranged axially to run substantially parallel to one another, characterized in that said fibers are retained by radial compression in a cylindrical rigid sheath (27), such that the packing or filling density of the filtration mass be comprised between 10'000 and 100'000 fibers/cm², in that an inflatable belt (29) surrounding this filtration mass is placed between the same and the inside wall of said cylindrical sheath to increase temporarily the density of said mass, this belt being connected to a pressurized air supply (19), in that the inflatable belt (29) is of a lesser height than that of the filtration mass (3) and in that annular members (30, 30') are arranged in the cylindrical sheath (27), respectively above and beneath this inflatable belt.

2. A filtration module according to claim 1, characterized in that the cylindrical sheath (27) surrounding the filtration mass (3) is made of a synthetic material, for example of polyvinyl chloride or of a metal.

3. A filtration module according to claim 1 or claim 2, characterized in that the fibers are continuous or not, in that they have a circular cross-section or are of some other shape and in that this cross-section has a diameter or a transverse dimension comprised between 3 and 40 micrometers.

4. A filtration module according to one of claims 1 to 3, characterized in that said two members form with said inflatable belt an integral removable cartridge.

5. A filtration apparatus for a liquid including a filtration body (1) having, respectively, inflow orifices (6) for the liquid to be treated and outflow orifices (10) for the filtered liquid, as well as orifices (12, 17) for the introduction of rinse water and pressurized air and outflow orifices (6, 15) for purging and rinsing the apparatus, characterized in that a module according to one of claims 1 to 4 is housed removably in said filtration body (1).

6. A filtration apparatus according to claim 5, characterized in that the filtration body (1) is divided vertically into three zones, a first zone (5) situated in the lower part of the body, including the inflow orifices (6) for the liquid to be treated and for purging, as well as means (23, 24) for controlling the internal pressure, a second zone (4) situated in the upper part of the body and including outflow orifices (10) for the filtered liquid as well as those (12, 17) for the introduction of pressurized air and rinse water, and a third zone situated between the two former ones, and in which is housed the filtration module (3).

7. A filtration apparatus according to claim 5 or claim 6, characterized in that it carries several filtration modules running parallel to one another and housed inside said filtration body, these modules being held together respectively by upper and lower assembly plates, also ensuring the watertightness of said modules.

## Patentansprüche

1. Filtereinheit für Flüssigkeitsfiltriergerät mit einer kompakten filtrierenden, aus dünnen, praktisch axial parallel zueinander angeordneten Fasern (28) bestehenden Masse (3), dadurch gekennzeichnet, dass die benannten Fasern durch radiales Zusammendrücken so in einer starren zylindrischen Hülle (27) gehalten werden, dass die Stopf- oder Fülldichte der filtrierenden Masse zwischen 10 000 und 100 000 Fasern pro cm² liegt; dass ein aufblasbarer Gürtel (29), der diese filtrierende Masse umschliesst, zwischen dieser Masse und der Innenwand der benannten zylindrischen Hülle angeordnet ist, um zeitweilig die Dichte der benannten Masse zu erhöhen, wobei dieser Gürtel an eine Druckluftversorgung (19) angeschlossen ist; und dadurch, dass der aufblasbare Gürtel (29) eine geringere Höhe als die filtrierende Masse (3) hat, während ringförmige Elemente (30, 30') über bzw. unter diesem aufblasbaren Gürtel in der zylindrischen Hülle (27) angeordnet sind.

2. Filtereinheit gemäss Anspruch 1, dadurch gekennzeichnet, dass die die filtrierende Masse (3) umschliessende zylindrische Hülle (27) aus einem Kunststoff, zum Beispiel Polyvinylchlorid, oder einem metallischen Werkstoff gefertigt ist.

3. Filtereinheit gemäss Anspruch 1 oder 2, dadurch gekennzeichnet, dass die Fasern durchgehend oder nicht durchgehend und von kreisförmigem oder anderem Querschnitt sind und dass dieser Querschnitt einen Durchmesser bzw. eine Querabmessung zwischen 3 und 40 Mikrometern aufweist.

4. Filtereinheit gemäss einem der Ansprüche 1 bis 3, dadurch gekennzeichnet, dass diese beiden Elemente zusammen mit dem benannten aufblasbaren Gürtel eine aus einem Stück hergestellte, austauschbare Patrone bilden.

5. Flüssigkeitsfiltriergerät mit einem Filterkörper (1), der Öffnungen für den Eintritt (6) der zu behandelnden Flüssigkeit bzw. für den Austritt (10) der filtrierten Flüssigkeit aufweist, ferner Öffnungen für die Einführung (12, 17) von Spülwasser und Druckluft sowie Entleerungsöffnungen (6, 15) für das Durchblasen und Spülen des Geräts, dadurch gekennzeichnet, dass eine Einheit gemäss einem der Ansprüche 1 bis 4 auswechselbar in dem benannten Filterkörper (1) untergebracht ist.

6. Filtriergerät gemäss Anspruch 5, dadurch gekennzeichnet, dass der Filterkörper (1) in der Senkrechten in drei Zonen unterteilt ist, wobei eine erste, im unteren Abschnitt des Körpers liegende Zone (5) die Öffnungen für den Eintritt (6) der zu behandelnden Flüssigkeit und für die Entleerung sowie Kontrollorgane für den Innendruck (23, 24) umfasst, eine zweite, im oberen Abschnitt des Körpers liegende Zone (4) die Öffnungen für den Austritt der filtrierten Flüssigkeit (10) sowie für die Einführung (12, 17) von Druckluft und Spülwasser umfasst und eine dritte, zwischen den ersten beiden Zonen liegende Zone die Filtereinheit (3) beherbergt.

7. Filtriergerät gemäss Anspruch 5 oder Anspruch 6, dadurch gekennzeichnet, dass es mehrere parallel zueinander in dem benannten Filterkörper untergebrachte Filtereinheiten umfasst, die durch eine obere bzw. untere Montageplatte gehalten werden, wobei diese Platten zugleich für die gegenseitige Abdichtung der benannten Einheiten sorgen.
